Europäisches Patentamt

European Patent Office

Office européen des brevets

(19)

(11) Publication number: **0 395 204**
**A1**

(12) **EUROPEAN PATENT APPLICATION**

(21) Application number: **90302506.2**

(22) Date of filing: **08.03.90**

(51) Int. Cl.⁵: **B32B 27/32, B32B 15/08**

(30) Priority: **24.04.89 US 341993**

(43) Date of publication of application:
**31.10.90 Bulletin 90/44**

(84) Designated Contracting States:
**AT BE CH DE DK ES FR GB GR IT LI LU NL SE**

(71) Applicant: **MOBIL OIL CORPORATION**
**150 East 42nd Street**
**New York New York 10017(US)**

(72) Inventor: **Mount, Eldridge Milford III**
**88 County Downs Circle**
**Fairport, New York 14450(US)**
Inventor: **Joyner, Patrick Keith**
**Rural Route 1**
**Belleville, Ontario K8N 4Z1(CA)**
Inventor: **Migliarini, Robert Andrew**
**21 Great Wood Court, Unit 1**
**Fairport, New York 14450(US)**

(74) Representative: **Curtis, Philip Anthony (GB) et**
**al**
**Patent Department, Mobil Court 3 Clements**
**Inn**
**London WC2A 2EB(GB)**

(54) **Metallized oriented polypropylene film with improved metal fracture resistance.**

(57) Films comprising a homopolymer polypropylene core layer and, on at least one side thereof, a skin layer of an ethylene-propylene or ethylene-propylene-butene-1 polymer which skin layer has a thickness of no greater than about 2 gauge (0.508 micron), are disclosed. When said skin layer is treated, as by flame or corona-discharge treatment, and metallized, the resulting films exhibit excellent metal adhesion and improved metal fracture resistance.

EP 0 395 204 A1

## METALLIZED ORIENTED POLYPROPYLENE FILM WITH IMPROVED METAL FRACTURE RESISTANCE

This invention relates to metallized oriented polypropylene (OPP) films which exhibit improved metal fracture resistance.

The metallization of OPP films to improve the barrier properties of the films is well known. It has previously been suggested (U.S. Patent 4 345 005 to All et al.) to improve the adhesion of the metal coating to the film surface, without the use of a prime coating, by coextruding the polypropylene core layer with a skin layer of ethylene propylene (EP) copolymer. The EP skin layer is corona-treated and the metal coating applied thereto.

Although such metallized multi-layered OPP films do exhibit excellent metal adhesion, they suffer from the disadvantage that they exhibit metal fracture or crazing when they are extrusion laminated. Metal fracture negatively affects laminate appearance and barrier properties. This disadvantage has limited the use of such metallized OPP films to primarily adhesive lamination applications.

It has now been found that metallized OPP films exhibiting excellent metal adhesion and improved metal fracture resistance may be prepared by decreasing the thickness of the EP skin layer to which the metal coating is applied relative to those disclosed in the prior art.

This invention therefore relates to a multi-layer OPP film which, when metallized, exhibits improved metal fracture resistance, which film comprises a coextruded homopolymer polypropylene core layer and, on at least one side thereof, a skin layer of an ethylene-propylene copolymer or ethylene-propylene-butene-1 (EPB) terpolymer, wherein said skin layer has a thickness of no greater than about 2 gauge (0.508 micron), preferably in the range of about 0.5 to 1.8 gauge (0.127 to 0.475 micron), more preferably in the range 0.5 to 1.75 gauge (0.127 to 0.445 micron). This invention also relates to such multi-layer OPP films in which said skin layer is corona discharge or flame treated, and to such films which include a metal coating on said treated surface. The inclusion of the metallized coating provides a metallized film structure.

This invention further provides a method of manufacturing an OPP film which, when metallized, exhibits improved metal fracture resistance, which method comprises coextruding a multi-layer film structure comprising a polypropylene core layer and, on at least one side thereof, a skin layer of an ethylene-propylene copolymer or ethylene-propylene-butene-1 terpolymer, wherein said skin layer has a thickness of no greater than about 2 gauge (0.508 micron); biaxially orienting said film substrate; subjecting said skin to flame or corona discharge treatment and applying a metallized coating to said treated skin layer. The skin layer preferably has a thickness in the range of about 0.5 to 1.8 (0.127 to 0.475 micron).

The core and skin layer preferably contains either no slip agent or no slip agent which adversely affects the adhesion of the film to the metallized coating.

The films of this invention are particularly suited for use in flexible packaging applications. The metallized coating acts to provide good barrier properties, and the presence of an EP or EPB outer layer (i.e. the skin layer) on the other side of the core layer can provide good seal properties. The "downgauging" of the EP or EPB outer layer does not adversely affect the inherent desirable properties of such layers, e.g., metal adhesion, processability and fitness-for-use.

The homopolymer polypropylene which is used in the core layer of the films of this invention is 80 to 100% isotactic, and preferably 95 to 96% isotactic, i.e., they have a type of polymeric molecular structure containing a sequence of regularly spaced asymmetric atoms arranged in like configuration in the polymer chain. Further, the homopolymer polypropylene core layer has a melt index of from about 2 to about 10 grams/10 minutes ($3.36 \times 10^{-6}$ to $16.7 \times 10^{-6}$ kg/s), and preferably a metl index of about 3.5 - 5.0 grams/10 minutes ($5.83 \times 10^{-6}$ to $8.33 \times 10^{-6}$ kg/s).

The skin layer(s) consist essentially of an ethylene propylene (EP) copolymer or ethylene-propylene-butene-1 (EPB) terpolymer. The EP copolymers may consist essentially of from about 0.5% to about 10% by weight of ethylene and from about 99.5% to about 90% by weight of propylene. Preferably, such EP copolymers each consist of about 2.0 - 7.0% by weight of ethylene and about 98-93% by weight of propylene. The EPB terpolymers may consist essentially of from about 2 to about 7% by weight of ethylene, from about 86 to about 96% by weight of propylene and from about 2 to about 7% by weight 1-butene. Preferably, such EP copolymers each consist of about 3 to about 5% by weight of ethylene, from about 90 to about 94% by weight of propylene and from about 3 to about 5% by weight 1-butene.

The core layer and the skin layer to which the metal coating is applied preferably contain either no slip agents or no slip agents which adversely affect the adhesion of the film to a metallized coating. If the film consists of additional layers, slip agents may be used in those layers provided that they do not adversely affect metal bonding.

The films of this invention may comprise two or more polymeric layers. The other side of the core layer, i.e., that opposite the side to which the EP or EPB skin layer and metallized coating are applied, may be suitably modified to provide the prerequisite seal properties. For example, since EP or EPB polymers provide excellent seal properties, a film consisting essentially of PP core layer and two outer layers of EP and EPB polymers may be prepared. Alternatively, a film consisting essentially of a core PP layer, one outer layer of EP or EPB polymer to which the metal coating may be applied, and another outer layer of a different polymer exhibiting the needed sealing properties may be prepared. In any event, the polypropylene core layer and EP or EPB skin layer(s) are coextruded in a known manner.

The coextruded film substrate is biaxially oriented and the EP or EPB skin layer which is to be metal coated is treated in a known manner, e.g. by flame or corona discharge, to a surface activity of about 35-60 dynes/cm. ($35 \times 10^{-3}$ to $60 \times 10^{-3}$ N/m), preferably to about 35-45 dynes/cm. ($35 \times 10^{-3}$ to $45 \times 10^{-3}$ N/m). Only one of the outer layers is generally subjected to this corona treatment because such treatment reduces the seal properties of such layer. The oriented films generally range in thickness from about 60 - 140 gauge (15.2 to 35.6 micron), preferably from 60 - 90 gauge (15.2 to 22.9 micron).

Next, a metallized coating is applied to the surface treated outer layer by any known method, for example, electroplating, sputtering and vacuum metallizing. The metal coating may be any of the typical metals such as aluminum, copper, silver and chromium.

This invention is further illustrated by the following example.

<div align="center">Example</div>

Various film constructions were produced which consisted of an ABC type structure where total film thickness was held constant at 80 gauge (20.3 micron). The C-layer represented the sealant side and was kept constant. The A-layer represented the treated surface for metal bonding and was varied in thickness from 1 to 5 gauge units (0.254 to 1.27 microns). The core (B-layer) consisted of PP homopolymer and was varied accordingly to maintain total film thickness at 80 gauge (20.3 micron). Two widely used EP and EPB polymers were evaluated as skin layers. The EP copolymer was one having an ethylene content of 3.4%. The EPB terpolymer was one having an ethylene content of 3.5% and a butene-1 content of 4.5%.

PP films with 1, 3 and 5 gauge (0.254, 0.762 and 1.27 micron) skin layers of either EP or EPB polymer were biaxially oriented, corona-discharge treated (A-layer) to about 37 dynes/cm. ($37 \times 10^{-3}$ N/m), and then vacuum metallized with aluminum to an optical density of 1.8 to 2.5. Metallized films were extrusion laminated to slip film using low density polyethylene (LDPE) (10#/ream) at a melt temperature of 620°F (327°C). Metal fracture % was quantified using an optical microscope with an image analyzer. The results of the evaluation are presented in Table I.

<div align="center">TABLE I</div>

| A-Layer Resin | A-Layer Thickness (gauge) | Visual Metal Fracture | Metal Fracture % |
|---|---|---|---|
| EP | 1 | None | 0.05 |
| EP | 3 | Medium | 15.74 |
| EP | 5 | Medium-heavy | 11.77 |
| EPB | 1 | None | 0.07 |
| EPB | 3 | Medium | 12.29 |
| EPB | 5 | Medium-heavy | 10.08 |

It will be noted that the amount of metal fracture exhibited by the films having an A-layer thickness of only 1 gauge was (0.254 micron) substantially less than that exhibited by films having A-layers of either 3- or 5-gauge (0.762 or 1.27 micron) thickness.

**Claims**

1. An oriented multi-layer film characterised by a homopolymer polypropylene core layer and, on at least one side thereof, a skin layer of a material selected from the group consisting of ethylene-propylene copolymers and ethylene-propylene-butene-1 terpolymers, wherein said skin layer has a thickness of no greater than substantially 2 gauge (0.508 micron).

2. A multi-layer film according to claim 1, characterised in that said skin layer has a thickness in the range of substantially 0.5 to 1.8 gauge (0.127 to 0.475 micron).

3. A multi-layer film according to claim 1 or 2, characterised in that said film is biaxially oriented.

4. A multi-layer film according to claim 1, 2 or 3, characterized in that the outer surface of said skin layer is flame or corona discharge treated.

5. A multi-layer film according to any preceding claim, characterised by a metallized coating on said treated skin layer.

6. A multi-layer film according to any preceding claim, characterised in that said skin layer comprises ethylene propylene copolymer containing substantially 0.5% to substantially 10% by weight ethylene and substantially 99.5% to substantially 90% by weight propylene.

7. A multi-layer film according to any one of claims 1 to 5, characterised in that said skin layer comprises ethylene-propylene-butene-1 terpolymer containing substantially 2 to 7% by weight ethylene, substantially 86 to 96% by weight propylene and substantially 2 to 7% by weight butene-1.

8. A multilayer film according to any preceding claim, characterised in that said skin layer has a surface activity in the range of substantially 35-60 dynes/cm. (35 x $10^{-3}$ to 60 x $10^{-3}$ N/m).

9. A multi-layer film according to any preceding claim, characterised in that said skin layer is on both sides of said polypropylene core.

10. A method for producing a metal coated oriented polypropylene substrate comprising:
coextruding a homopolymer polypropylene core layer and, on at least one side thereof, a skin layer selected from the group consisting of ethylene-propylene and ethylene-propylene-butene-1 polymers, and wherein said skin layer has a thickness of no greater than substantially 2 gauge (0.508 micron);
biaxially orienting said film substrate;
subjecting said skin layer to flame or corona discharge treatment to enhance adhesion of a metallized coating thereto; and
applying a metallized coating to said treated skin layer.

11. A method according to claim 10, characterised in that said skin layer has a thickness in the range of substantially 0.5 to 1.8 gauge (0.127 to 0.475 micron).

| | DOCUMENTS CONSIDERED TO BE RELEVANT | | EP 90302506.2 |
|---|---|---|---|

| Category | Citation of document with indication, where appropriate, of relevant passages | Relevant to claim | CLASSIFICATION OF THE APPLICATION (Int Cl⁵) |
|---|---|---|---|
| X | US - A - 4 692 380 (REID) * Claim 1; column 2, lines 16-68; column 3, lines 13-15 * -- | 1-11 | B 32 B 27/32 B 32 B 15/08 |
| X | EP - A2 - 0 122 495 (TORAY INDUSTRIES, INC.) * Claims; page 9, lines 7-9; page 21, line 12 - page 22, line 18 * -- | 1,3-6, 9,10 | |
| X | EP - A2 - 0 282 917 (HOECHST AKTIENGESELLSCHAFT) * Claims; page 2, lines 50-54 * -- | 1-7, 9-11 | |
| D,X | US - A - 4 345 005 (ALL et al.) * Claims; column 2, lines 25-42 * -- | 1-6, 9-11 | |
| | | | TECHNICAL FIELDS SEARCHED (Int Cl⁵) |
| A | US - A - 4 740 421 (SUZUKI et al.) * Claims * ---- | 1,3,7 | B 32 B 15/00 B 32 B 27/00 |

The present search report has been drawn up for all claims

| Place of search | Date of completion of the search | Examiner |
|---|---|---|
| VIENNA | 31-07-1990 | WEIGERSTORFE |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82